# EUROPÄISCHE PATENTSCHRIFT

(11) **EP 1 425 952 B1**
(45) Veröffentlichungstag und Bekanntmachung des Hinweises auf die Patenterteilung: **22.03.2006**
(21) Anmeldenummer: 03027712.3
(22) Anmeldetag: 02.12.2003
(51) Int. Cl.: A01D 41/12, A01F 12/60, B08B 9/093, B08B 9/08

(54) **Reinigungseinrichtung für einen Vorratsbehälter einer Erntemaschine**
Cleaning device for a storage tank of a harvester
Dispositif de nettoyage pour un réservoir d'une machine de récolte

(30) Priorität: 04.12.2002 US 309979
(43) Veröffentlichungstag der Anmeldung: 09.06.2004
(73) Patentinhaber: DEERE & COMPANY, Moline, Illinois 61265-8098 (US)
(72) Erfinder: Pope, Glenn E., IL 61486 Viola (US); VanDeVoorde, John P., IA 50021 Lynn Center (US)
(74) Vertreter: Holst, Sönke

(56) Entgegenhaltungen:
- US-A- 5 649 338
- US-B1- 6 408 864

## Beschreibung

Die Erfindung betrifft eine Erntemaschine mit einem Vorratsbehälter wie im EP- A-1153537 beschrieben.

Landwirtschaftlich angebautes Erntegut kann als essbares Erntegut, nichtessbares Erntegut, genetisch modifizierte Organismen (GMO), nichtgenetisch modifizierte Organismen, organisch angebaut, pestizidfrei oder entsprechend anderer Eigenschaften klassifiziert werden. Nichtessbares Erntegut können beispielsweise Fasern liefernde Pflanzen, Baumwolle oder Gummi sein. Genetisch modifiziertes Erntegut kann Gemüse sein, das genetisch manipuliert wurde, um die mögliche Regalstandzeit gegenüber traditionell angebautem Gemüse zu verlängern. Organisch angebautes Erntegut wird von Pflanzen geerntet, die ohne Beaufschlagung mit bestimmten Pestiziden, Herbiziden oder anderen Chemikalien angebaut wurden.

Das Erntegut kann entsprechend spezifischer Eigenschaften oder Spezifikationen angebaut werden. Die Eigenschaften des Ernteguts können auf der genetischen Zusammensetzung des Ernteguts oder den Anbaupraktiken des Ernteguts beruhen, oder auf beiden. Es kann beispielsweise eine bestimmte Art von Mais angebaut werden, der aufgrund genetischer oder umgebungsbedingter Faktoren einen größeren Ölgehalt hat als andere Arten. In ähnlicher Weise kann eine bestimmte Art von Sojabohnen angebaut werden, die einen anderen Proteingehalt oder eine andere wünschenswerte Eigenschaft hat. Ein Verarbeiter, eine pharmazeutische Gesellschaft, ein Hersteller oder ein anderer Betroffener kann den Wunsch haben, landwirtschaftliche Produkte mit spezifischen Eigenschaften von einem Anbauer oder anderen Lieferanten zu erwerben. Der Anbauer oder Lieferant kann sich wünschen, für Erntegut mit spezifischen Eigenschaften einen höheren Preis zu verlangen als für ein handelsübliches Erntegut. Der Erwerber des landwirtschaftlichen Produkts kann eine hinreichende Bestätigung wünschen, dass das gekaufte landwirtschaftliche Produkt tatsächlich die gesuchten Eigenschaften aufweist.

Es besteht ein Bedarf daran, Erntegut mit spezifischen Eigenschaften während des Anbaus und der Verteilung und jeglicher daraus abgeleiteter Produkte genau zu identifizieren. Außerdem kann ein Erwerber eines landwirtschaftlichen Produkts oder Ernteguts die Möglichkeit wünschen oder verlangen, die Identität des Ernteguts mit spezifischen Eigenschaften nachzuverfolgen, um das Vorhandensein von Eigenschaften des Ernteguts oder die Abwesenheit unerwünschter Eigenschaften als Bedingung für eine kommerzielle Transaktion zu überprüfen.

Es besteht somit ein Bedarf, Erntegut während der Ernte zu trennen, damit keine Vermischung von Erntegut oder Erntegutresten mit verschiedenen Eigenschaften stattfindet. Deshalb wird eine Erntemaschine, wie ein Mähdrescher, vorzugsweise gereinigt, bevor sie bei der Ernte eines nachfolgenden Ernteguts mit anderen Eigenschaften verwendet wird. Nach dem Entladen eines Vorratsbehälters eines Mähdreschers können Korn und Verunreinigungen in den unteren Bereichen des Vorratsbehälters und im Entladerohr verbleiben, die nicht ohne Schwierigkeiten mechanisch entfernt werden können.

Derzeit muss der Bediener zur gründlichen Reinigung des Vorratsbehälters manchmal in einen sehr kleinen Raum kriechen, der nicht vom Erdboden aus zugänglich ist und Korn und Verunreinigungen daraus heraus saugen oder fegen. Die übliche Zeit und der Aufwand zum vollständigen Entfernen des Korns und der anderen Überreste aus dem Mähdrescher, insbesondere aus dem Vorratsbehälter und dem Entladerohr ist sehr lang und diese Aufgabe ist wegen der Beschränkungen des Zugangs zum Entladerohr und anderen Bereichen schwierig. Während des Reinigens des Tanks ist es schwierig, den Bereich unter den Abdeckungen der quer verlaufenden Schneckenförderer und versteckte Bereiche des Vorratsbehälters zu reinigen. Ein anderes schwieriges Problem bei der Reinigung von Mähdreschern ist es, das horizontale Entladerohr zu reinigen. Es gibt nur einen begrenzten Zugang und keine effektive Methode, zu einer angemessenen Reinigung Zugang zum Entladerohr zu erhalten.

Gegenwärtig besteht ein Verfahren zur Reinigung des Mähdreschers in der Verwendung von Druckluft, um Erntegut, Korn und Überreste aus eingeschlossenen Bereichen des Mähdreschers fortzublasen. Eines der schwierigeren Probleme in der Reinigungsprozedur liegt in der Handhabung eines dicken und langen Druckluftschlauchs und eines langen Düsenrohrs um den und auf dem Mähdrescher, um verschiedene Flächen zu erreichen. Flächen wie im Vorratsbehälter und im Motorraum sind besonders schwierig zugänglich und umständlich zu reinigen, ohne teure Teile wie Hauben, die leicht durch einen darüber schleifenden oder gleitenden Druckluftschlauch zerkratzt werden, zu beschädigen.

Die US 6 408 864 B schlägt einen Speichertank des Silotyps vor, der mit Öffnungen zum Ausströmen eines Reinigungssprays ausgestattet ist. Eine Anregung zur Übertragung auf eine Erntemaschine wird nicht gegeben.

Das der Erfindung zu Grunde liegende Problem wird darin gesehen, die genannten Probleme zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Erntemaschine mit einer Reinigungseinrichtung vorgeschlagen. Die Erntemaschine weist einen Vorratsbehälter für geerntetes Korn oder anderes Erntegut auf. Das Reinigungssystem umfasst eine Quelle für ein unter Druck stehendes, fließfähiges Reinigungsmedium, bei dem es sich um Luft, ein anderes Gas oder eine Reinigungsflüssigkeit, wie Wasser oder Seifenwasser, handeln kann. Das Reinigungssystem umfasst Düsen, die über Leitungen mit der Quelle in Verbindung stehen. Die Düsen lassen das Reinigungsmedium an der Innenseite des Vorratsbehälters aus, um ihn zu reinigen.

Durch ein Bereitstellen von strategisch angebrachten Düsen und zugeordneten Absperrventilen kann ein effektives Reinigen von Flächen ohne manuelles Reinigen erzielt werden, wodurch die Zeit zum Reinigen der Erntemaschine beträchtlich vermindert wird.

In der Regel befindet sich am Boden des Vorratsbehälters ein Schneckenförderer zum Austragen des Ernteguts, der sich von Hand wegen seiner schlechten Zugänglichkeit nur schwer reinigen lässt. Die Düsen dienen somit insbesondere zur Reinigung des Schneckenförderers. Das Reinigungsmedium wird zweckmäßigerweise in Längsrichtung des Schneckenförderers ausgegeben. Er wird vorzugsweise während der Reinigung gedreht.

Das Reinigungssystem kann auch noch weitere Düsen umfassen, die fest mit der Erntemaschine und dem Leitungsnetzwerk für das Reinigungsmedium verbunden sind. Die Düsen verströmen das Reinigungsmedium auf eine Fläche der Erntemaschine. Das Leitungsnetzwerk kann ein Absperrventil aufweisen, das zwischen der Düse und der Quelle angeordnet ist.

Ein Verteilerventil für das Reinigungsmittel, an dem leicht eine Quelle für das Reinigungsmittel angeschlossen werden kann, kann sich auf der Erntemaschine befinden. Die Quelle selbst ist stationär oder befindet sich auf der Erntemaschine.

Bei einer bevorzugten Ausführungsform umfasst die Reinigungseinrichtung ein Leitungsnetzwerk zur Aufnahme des unter Druck stehenden Reinigungsmediums und ein Anschlussstück in der Nähe des Vorratsbehälters. Diese Erfindung kann alternativ oder zusätzlich zu den Düsen zur Reinigung des Vorratsbehälters eingesetzt werden. Das Anschlussstück ist derart angeordnet und gestaltet, dass an ihm ein kurzer, tragbarer Reinigungsschlauch und ein damit verbundenes Düsenrohr bzw. eine Reinigungspistole anschließbar ist, die durch einen Bediener nutzbar sind, um den Vorratsbehälter von innen her zu reinigen. Es können auch Anschlussstücke in der Nähe des Erntevorsatzes und/oder des Strohhäckslers angebracht sein, die beide vom Erdboden aus zugänglich sind. Anschlussstücke können an allen vier Ecken der Erntemaschine vorgesehen sein. Dadurch kann ein effektiv einsetzbarer Schlauch kurz, leicht und unschwer handhabbar gestaltet werden. Die beabstandeten Anschlussstücke sind vorzugsweise an Stellen angeordnet, an denen sich Korn oder Verunreinigungen ansammeln.

In den Zeichnungen sind drei nachfolgend näher beschriebene Ausführungsbeispiele der Erfindung dargestellt. Es zeigt:
- Fig. 1: eine schematische Seitenansicht einer Erntemaschine, in der die vorliegende Erfindung verwirklicht ist,
- Fig. 1a: eine vergrößerte Seitenansicht eines Bereichs des Vorratsbehälters der Erntemaschine aus Figur
- Fig. 2: eine schematische Draufsicht auf die Erntemaschine aus Figur 1,
- Fig. 3: ein schematisches Diagramm eines erfindungsgemäßen Reinigungssystems, das mit Druckluft arbeitet,
- Fig. 4: eine perspektivische Ansicht einer Beleuchtungshalterung, die einen Luftauslassanschluss trägt,
- Fig. 5: eine perspektivische Ansicht einer Luftdüse,
- Fig. 6: eine Schnittansicht, die im Wesentlichen entlang der Linie 6-6 in Figur 1 aufgenommen ist,
- Fig. 7: eine vergrößerte perspektivische Explosionszeichnung, teilweise im Schnitt gezeichnet, von einer anderen Ausführungsform einer Luftdüse, die am Vorratsbehälter befestigt ist, und
- Fig. 8: eine vergrößerte perspektivische Explosionszeichnung einer weiteren alternativen Ausführungsform einer Luftdüse, die teilweise im Schnitt gezeichnet ist.

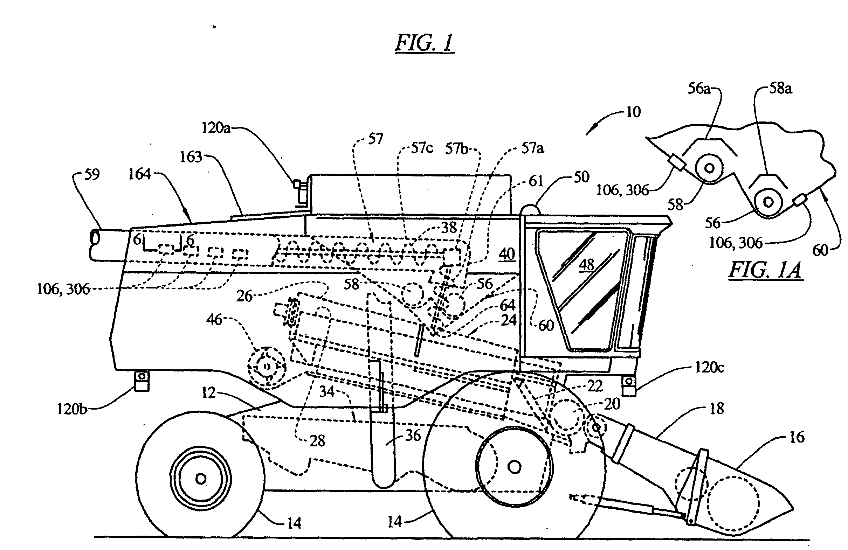

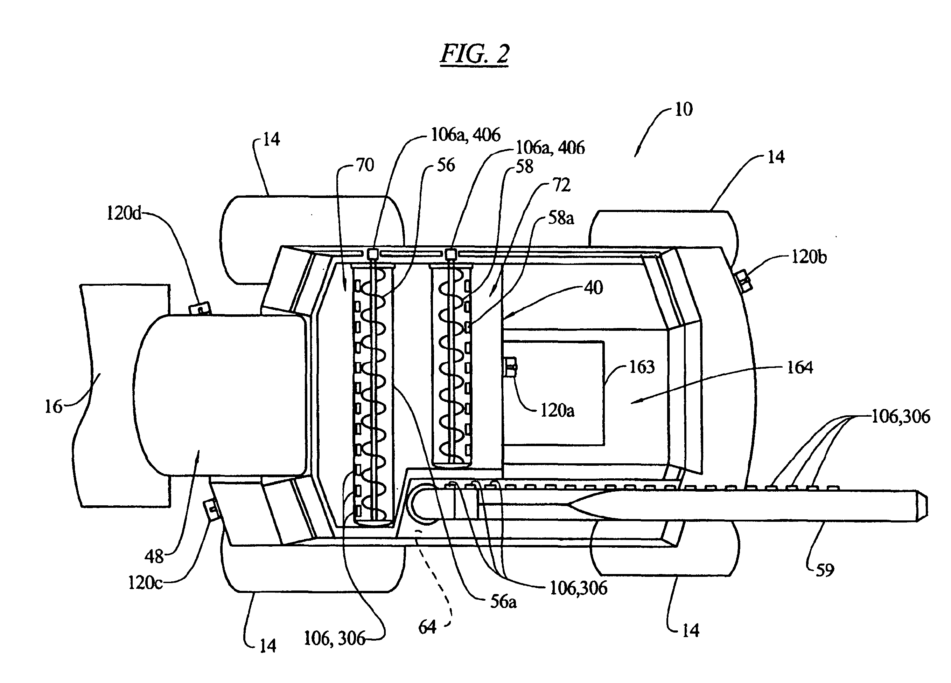

Die Figuren 1 und 2 zeigen einen landwirtschaftlichen Mähdrescher 10, der eine tragende Struktur 12 mit im Eingriff mit dem Erdboden befindlichen Mitteln 14 aufweist, die sich von der tragenden Struktur 12 nach unten erstrecken. Ein derartiger Mähdrescher ist in der US 6 285 198 detailliert beschrieben. Anstelle des dargestellten Axialmähdreschers kann die Erfindung auch an beliebigen anderen Typen von Mähdreschern verwendet werden, wie konventionellen Strohschüttlermaschinen. Ein Schneidwerk 16 wird verwendet, um Erntegut zu ernten und es einem Schrägförderer 18 zuzuführen. Das geerntete Gut wird durch den Schrägförderer 18 einer Leittrommel 20 zugeführt. Die Leittrommel 20 führt das Erntegut nach oben durch einen Einlassübergangsabschnitt 22 zu einer axialen Gutbearbeitungseinheit 24. Die axiale Gutbearbeitungseinheit 24 ist zwischen den Seitenwänden des Mähdreschers 10 angeordnet und wird von ihnen abgestützt.

Die axiale Gutbearbeitungseinheit 24 umfasst ein axiales Rotorgehäuse 26 und einen im Rotorgehäuse 26 angeordneten axialen Rotor 28. Das geerntete Gut tritt durch den Einlassübergangsabschnitt 22 in das Rotorgehäuse 26 ein. Der Rotor 28 ist mit einem Beschickungsabschnitt, einem Dreschabschnitt und einem Trennabschnitt ausgestattet. Das Rotorgehäuse 26 hat je einen entsprechenden Beschickungsabschnitt, Dreschabschnitt und Trennabschnitt.

Beide Gutbearbeitungsabschnitte des Rotors 28, der Dreschabschnitt und der Trennabschnitt sind mit Guteingriffszusammenbauten ausgestattet. Der Dreschabschnitt des Rotorgehäuses 26 ist mit einem Dreschkorb ausgestattet und der Trennabschnitt mit einem Rost. Aus der Gutmatte freigesetzte Körner und Spreu fallen durch den Dreschkorb und den Rost. Der Dreschkorb und der Rost verhindern den Durchtritt von Erntegut, das größer als Korn oder Kaff ist, in das Reinigungssystem 34.

Wie in der Figur 1 dargestellt, wird durch den Dreschkorb und den Rost fallendes Korn und Spreu dem Reinigungssystem 34 zugeführt, das die Spreu vom Korn trennt. Das saubere Korn wird dann durch einen Elevator 36 für sauberes Korn einem Befüllschneckenförderer (nicht gezeigt) zugeführt. Der Elevator 36 für sauberes Korn und der Befüllschneckenförderer umfassen Mittel zum Bewegen des sauberen Korns vom Kornboden des Mähdreschers in einen Vorratsbehälter 40 in Form eines Korntanks. Das Korn wird durch einen Entladeschneckenförderer 57 aus dem Vorratsbehälter 40 entfernt. Wenn das Stroh das Ende der Gutbearbeitungseinheit 24 erreicht hat, wird es durch einen Auslass einer Auswurftrommel 46 zugeführt. Die Auswurftrommel 46 fördert das Stroh zur Rückseite des Mähdreschers 10 hinaus. Die Bedienung des Mähdreschers 10 erfolgt von einer Bedienerkabine 48 aus.

Wenn der Vorratsbehälter 40 zu entleeren ist, führen quer angeordnete Entladeschneckenförderer 56 und 58 das Korn an die Seite des Vorratsbehälters 40, wo es mit dem Entladeschneckenförderer 57 in Berührung kommt, der das saubere Korn durch ein vertikales Entladerohr 61 und ein horizontales Entladerohr 59 leitet. Der Entladeschneckenförderer 57 umfasst einen vertikalen Abschnitt 57a, der sich zumindest teilweise innerhalb des Entladerohrs 61 befindet, ein rechtwinkliges Getriebe 57b, und einen horizontalen Abschnitt 57c innerhalb des Entladerohrs 59. Während einer Entladeoperation würde sich das Entladerohr 59 normalerweise von der Seite des Mähdreschers 10 nach außen erstrecken, so dass sauberes Korn einfacher in einen Wagen oder Anhänger geleitet werden kann.

Der Vorratsbehälter 40 umfasst einen Trog 60, der einen größeren Trogbereich 70 und einen kleineren Trogbereich 72 umfasst, welche die horizontalen Entladeschneckenförderer 56 und 58 aufnehmen. Der Trog 60 ist zu einem Ladegehäuse oder Sumpf 64 hin offen. Der vertikale Abschnitt 57a des Entladeschneckenförderers 57 erstreckt sich durch das vertikale Rohr 61 und in den Sumpf 64. Das durch die horizontalen Entladeschneckenförderer 56 und 58 geförderte Korn wird in den Sumpf 64 abgegeben und durch den vertikalen Abschnitt 57a durch das Rohr 61 und durch den horizontalen Abschnitt 57 c durch das Entladerohr 59 entfernt.

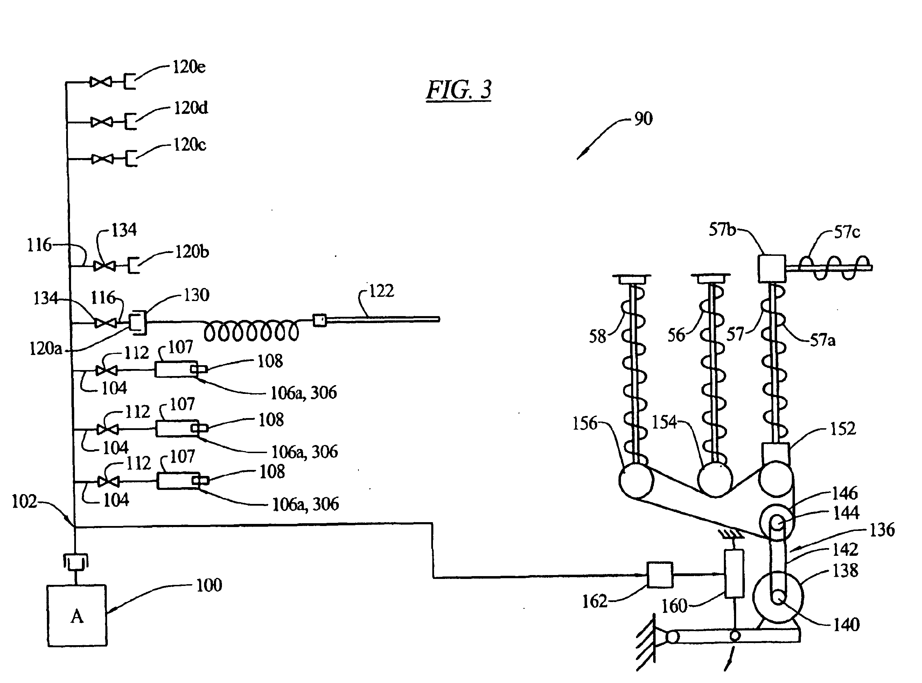

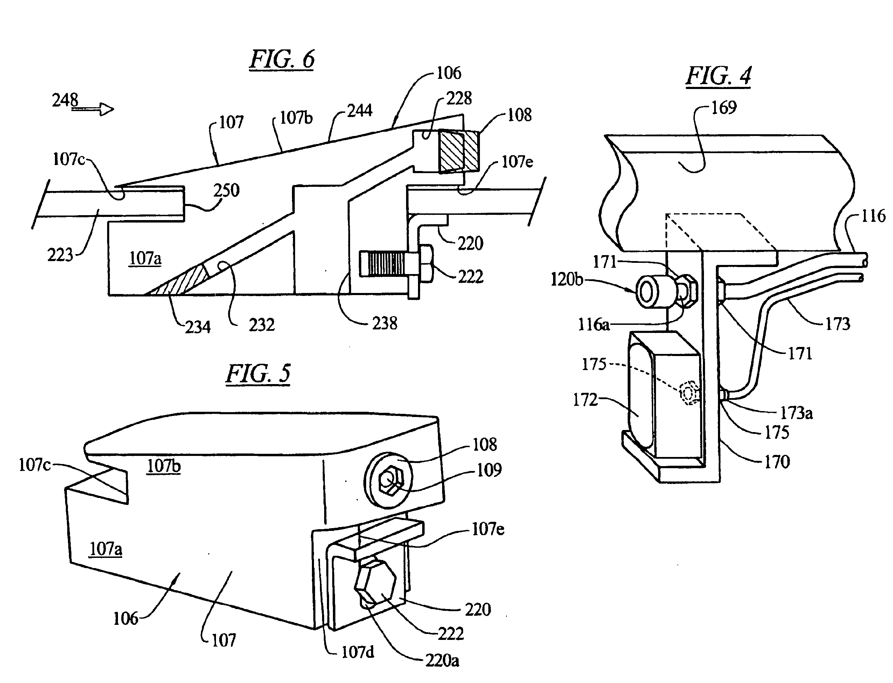

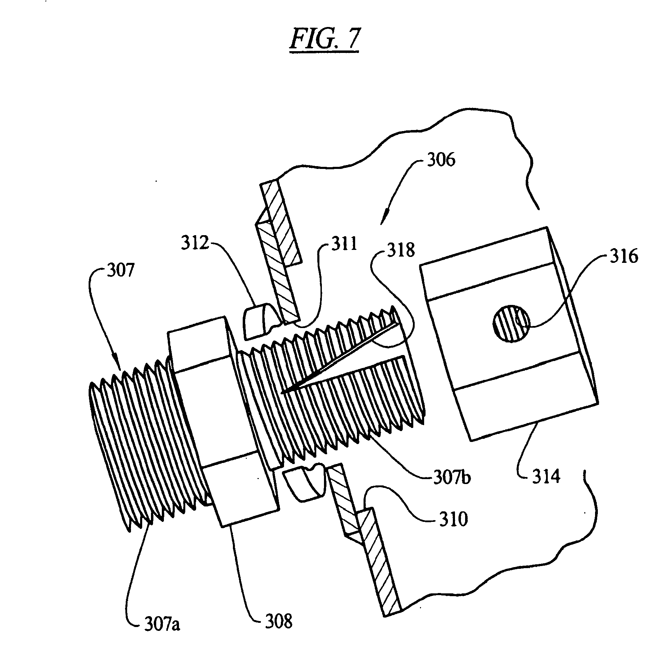

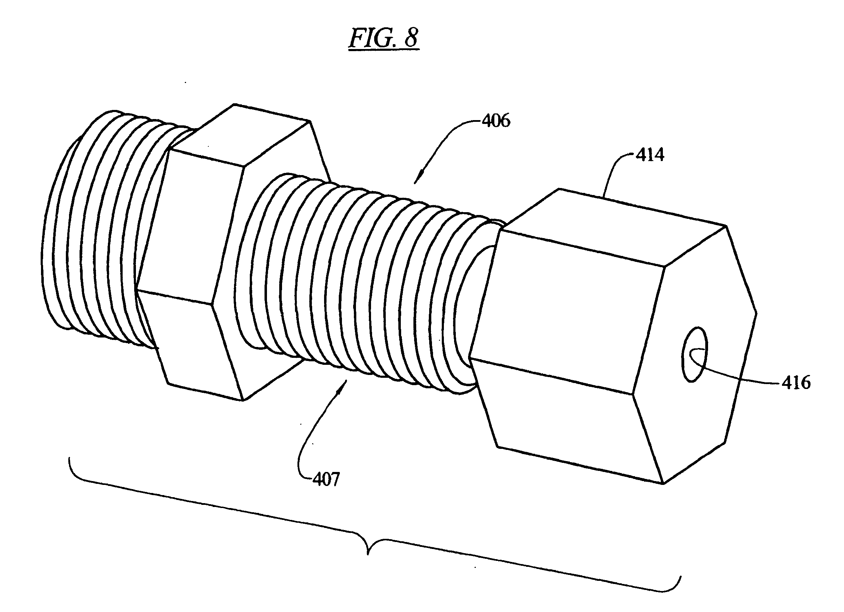

Die Figur 3 zeigt in schematischer Weise ein erfindungsgemäßes Luftsystem 90. Eine Luftquelle 100 gibt unter Druck stehende Luft in ein Rohrsystem 102 ab, das sich über den Mähdrescher 10 erstreckt. Die Luftquelle kann sich außerhalb des Mähdreschers 10 befinden. Das Rohrsystem 102 umfasst Zweigleitungen 104, die Luft an stationäre Düsen 106, 106a oder alternativ verwendbare Düsen 306, 406 (in den Figuren 7 und 8 gezeigt), die jeweils einen Düsenkörper 107 aufweisen, oder alternativ 307, 407, die Luft an das Düsenelement 108 oder alternativ 314, 414 abgeben. Luft strömt mit hoher Geschwindigkeit durch eine Öffnung 109 (Figur 5) oder alternativ 316, 416 (Figuren 7 und 8) des Düsenelements 108 bzw. 314, 414. Obwohl zur Vereinfachung nur zwei Düsen 106, 306 und eine Düse 106a, 406 gezeigt werden, ist anzumerken, dass viele Düsen über den Mähdrescher 10 verteilt und an schwer zugänglichen oder beengten Stellen beispielsweise innerhalb des Entladerohrs 59, um die Schneckenförderer 56, 57, 58 oder unter den horizontalen Schneckenfördererabdeckungen 65a, 58a (Figur 1A und in gestrichelten Linien in Figur 2 gezeigt) angeordnet werden könnten. Jede Zweigleitung 104 kann ein Absperrventil 112 aufweisen.

Das Rohrsystem 102 umfasst weiterhin Zweigleitungen 116, die jeweils in einem schnell lösbaren Anschlussstück 120a, 120b, 120c, 120d, 120e enden. Ein tragbares Düsenrohr 122 kann mit den Anschlussstücken 120a-120e über einen spiralförmigen Druckluftschlauch 126 und ein passendes Kupplungsstück 130 verbunden werden. Die Anschlussstücke 120a-120e und das Kupplungsstück 130 können alternativ mit Schraubgewinden versehen oder irgendeine andere leitende Verbindung für unter Druck stehende Luft sein.

Obwohl nur einige Zweigleitungen 116 und Anschlussstücke 120a-120e gezeigt werden, können viele Zweigleitungen 116 und Anschlussstücke 120a-120e über den Mähdrescher 10 verteilt werden. Die Zweigleitungen 116 können ebenfalls mit Absperrventilen ausgestattet werden.

Um den Reinigungsvorgang zu verbessern, werden die Schneckenförderer 56-58 durch ein zusätzliches Drehantriebssystem 136 gedreht. Das zusätzliche Drehantriebssystem 136 zum langsamen Drehen der Schneckenförderer ist in der US-Patentanmeldung 10/309977 offenbart.

Das zusätzliche Drehantriebssystem 136 lässt sich folgendermaßen kurz beschreiben. Es umfasst einen 12 V Gleichstrommotor 138, der eine Riemenscheibe 140 antreibt, die einen Riemen 142 antreibt, wenn der Gleichstrommotor 138 während des Reinigungsbetriebs aktiviert wird. Der Riemen 142 treibt eine Riemenscheibe 144 an, die ein Ritzel 146 antreibt, das während eines normalen Entladebetriebs durch den Antriebsstrang des Mähdrescher 10 mit hoher Geschwindigkeit angetrieben wird. Das Ritzel 146 treibt eine Kette 148 an, die ein Ritzel 150 antreibt, welche ein rechtwinkliges Getriebe 152 antreibt, das den Schneckenförderer 57 antreibt. Die Kette 148 treibt auch Ritzel 154, 156 an, die die Schneckenförderer 56, 58 antreiben. Der relativ kleine Gleichstrommotor 138 treibt die Schneckenförderer 56-58 während des Reinigungsbetriebs mit kleinen Geschwindigkeiten an. Ein pneumatischer Zylinder 160 wird durch eine pneumatische Steuerung 162 gesteuert, um den Gleichstrommotor 138 zu drehen und den Riemen 142 zu spannen und die Riemenscheibe 144 anzutreiben. Die pneumatische Steuerung 162 wird durch die Luftquelle 100 mit unter Druck stehender Luft versorgt.

Es wird wieder auf die Figuren 1 und 2 Bezug genommen, gemäß denen die Anschlussstücke 120a-120e vorzugsweise folgendermaßen angeordnet sind. Ein Anschlussstück 120a des Vorratsbehälters 40 ist an einer angehobenen Position an einer rechten Seite des Vorratsbehälters 40 angeordnet. Das erlaubt es einem Bediener, der auf einer Zugangsplattform 163 steht, das Kupplungsstück 130 an dem Anschlussstück 120a anzuschließen und das Düsenrohr 122 zum Reinigen des Vorratsbehälters 40 und des Motorbereichs 164 zu verwenden.

Ein hinteres Anschlussstück 120b ist nahe des Strohhäckslers 44 in einer Höhe angeordnet, in der es vom Erdboden aus zugänglich ist. Diese Position erlaubt es, das Kupplungsstück 130 des Düsenrohrs 120 an dem Anschlussstück 120b anzuschließen und das Düsenrohr 120 durch den Bediener zum Sauberblasen des Strohhäckslers 44 und anderer rückwärtiger Bereiche des Mähdreschers 10 zu verwenden.

Ein vorderes linkes Anschlussstück 120c ist auch in einer Höhe angebracht, in dem es vom Erdboden aus zugänglich ist. Wenn das Kupplungsstück 130 des Düsenrohrs 122 mit dem linken Anschlussstück 120c verbunden ist, kann das Düsenrohr 122 verwendet werden, um einen linken Seitenabschnitt des Schneidwerks 22 sauberzublasen. Ein vorderes rechtes Anschlussstück 120d ist an der anderen Seite der Bedienerkabine 48 etwa in derselben Höhe wie das Anschlussstück 120c angebracht und kann verwendet werden, das Düsenrohr 122 zur Reinigung der rechten Seite des Schneidwerks 22 anzuschließen.

Die Figur 4 zeigt ein Beispiel eines Befestigungssystems für die Anschlussstücke 120b-120e am Beispiel des Anschlussstücks 120b. Nach dieser Ausführungsform sind die Zweigleitung 116 und das Anschlussstück 120b an einer Halterung 170 befestigt, die durch Schweißnähte oder Befestigungselemente an einem Fahrgestellaufbau 169 befestigt ist. Das Anschlussstück 120b kann durch mit Gewinden ausgestatteten Muttern 171 befestigt werden, die an gegenüberliegenden Seiten der Halterung 170 angeordnet sind und auf einen mit Gewinde versehenen Bereich 116a der Zweigleitung 116 geschraubt werden, um die Halterung 170 zwischen den Muttern 171 einzuklemmen. Die Halterung 170 dient auch zum Anbringen eines Fahrlichts 172, das durch ein Kabel 173 mit der Betriebsspannung des Mähdreschers 10 elektrisch verbunden ist. Das Fahrlicht 172 und das Kabel 173 können durch mit Gewinden versehenen Muttern 175 befestigt werden, die an gegenüberliegenden Seiten der Halterung 170 angeordnet sind und auf einen mit Gewinde versehenen Abschnitt 173a des Kabels 173 geschraubt werden, um die Halterung 170 zwischen den Muttern 175 einzuklemmen. Durch die Befestigung dieser beiden Elemente 120b, 172 an einer einzigen Halterung 170 wird die Anzahl der Einzelteile des Mähdreschers 10 gering gehalten. Die Zusammenbauzeit wird entsprechend vermindert. Die Zweigleitung 116 und das Kabel 173 können zusammen auf dem Fahrgestell geführt werden, was die Zusammenbauzeit weiter vermindert. Ein ähnlicher Zusammenbau mit einer Halterung und einer Beleuchtung kann an dem weiter oben angeordneten Anschlussstück 120a verwendet werden.

Es wird wieder auf die Figuren 1, 1A und 2 verwiesen, in denen gezeigt wird, dass mehrere feste Düsen 106, 106a oder alternativ 306, 406 innerhalb des Vorratsbehälters 40 in der Nähe der Schneckenförderer 56, 58 und entlang ihrer Länge bereitgestellt werden. Die Düsen 106, 106a können um etwa 30 cm voneinander entlang der Länge der Schneckenförderer 56, 58 beabstandet sein und ihre Öffnungen können derart angeordnet sein, dass ihr Luftfluss axial und/oder an der geneigten Wand des Vorratsbehälters 40 nach unten gerichtet ist. Düsen 106a oder 406 werden an der Seitenwand des Vorratsbehälters 40 bereitgestellt, die am weitesten vom Sumpf 64 beabstandet ist und leiten Luft axial an den Schneckenförderern 56, 58 nach unten. Eine Mehrzahl an Düsen 106 oder 406 sind auch innerhalb des horizontalen Entladerohrs 59 bereitgestellt.

Die Düsen können wie in der US-Patentanmeldung 10/309978 beschrieben konfiguriert, angeordnet und voneinander beabstandet sein.

Eine Düse 106 ist in der Figur 5 illustriert. Die Düsen 106a wären ähnlich konfiguriert, aber mit einer um 90° gedrehten Öffnung versehen. Der Düsenkörper 107 umfasst einen Basisblockabschnitt 107a und einen inneren Blockabschnitt 107b. Ein Schlitz 107c ist im Basisblockabschnitt 107a benachbart zum inneren Blockabschnitt 107b an einem stromauf liegenden Ende des Düsenkörpers 107 angeordnet. An einem stromab liegenden Ende des Basisblockabschnitts 107a ragt der innere Blockabschnitt 107b über den Basisblockabschnitt 107a hinaus. Eine Klemmhalterung 220 ist mit einer Schraube 222 an einer stromab liegenden Fläche 107d des Basisblockabschnitts 107a befestigt. Eine Lücke 107e ist zwischen einer unteren Fläche des inneren Blockabschnitts 107b und einer oberen Fläche der Klemmhalterung 220 gebildet. Die Klemmhalterung 220 umfasst einen Schlitz 220a, um die Klemmhalterung 220 eng gegen eine Wand 223 des Mähdreschers 10 schieben zu können, wie z. B. die Wand des Entladerohrs 59 oder des Trogs 60 des Vorratsbehälters 40, bevor die Schraube 222 angezogen wird.

Wie in der Figur 6 gezeigt, umfasst die Düse 106 das Düsenelement 108, das in eine Öffnung 228 in dem inneren Blockabschnitt 107b eingeschraubt ist. Eine durchgehende Bohrung 232 durch den Basisblockabschnitt 107a und den inneren Blockabschnitt 107b ist nach ihrer Herstellung durch einen Schweißstopfen 234 verstopft. Die durchgehende Bohrung 232 steht mit der Öffnung 228 in Verbindung. Das Düsenelement 108 kann unter Verwendung eines Sechskantsteckschlüssels installiert werden. Eine Einlassbohrung 238 erstreckt sich im Wesentlichen senkrecht zu einer unteren Oberfläche des Basisblockabschnitts 107a und schneidet die durchgehende Bohrung 232. Die Einlassbohrung 238 ist mit einem Gewinde versehen, um ein Luftversorgungsfitting aufzunehmen.

Der innere Blockabschnitt 107b ist abgeschrägt, um eine geneigte obere Fläche 244 zu bilden, deren Entfernung von der inneren Oberfläche des Entladerohrs 59 oder des Sumpfs 60 in Richtung des Kornflusses 248 ansteigt. Wegen dieser Schrägung ist der Düsenkörper 107 vor unerwünschter Abnutzung durch auftreffendes Korn geschützt. Eine Verstopfung des Entladeschneckenförderers 57 oder des Sumpfs 60 mit Korn auf Grund von Mitziehens des Kornflusses oder Störungen ist unterbunden.

Die Düse 106 ist auf und in einer rechteckigen Öffnung 250 in der Wand 223 angebracht. Der Schlitz 107c nimmt einen Abschnitt der Wand 223 auf und die Klemmhalterung 220 wird gegen die Wand 223 geschoben und die Schraube 222 wird angezogen, um die Wand 223 zu erfassen. Der innere Blockabschnitt 107b befindet sich somit auf der Innenseite der Wand 223 und der Basisblockabschnitt 107a befindet sich außerhalb der Wand 223.

Die Figur 7 zeigt eine alternativ verwendbare Düse 306. Die Düse 306 umfasst einen Düsenkörper 307 mit einem mit Gewinde versehenen, rohrförmigen Basisabschnitt 307a und einen mit Gewinde versehenen, rohrförmigen inneren Abschnitt 307b, die durch einen Block 308 voneinander getrennt sind, an dem ein Gabelschlüssel angreifen kann. Der Basisabschnitt 307a nimmt eine mit Gewinde versehene Verbindung (nicht gezeigt) mit unter Druck stehender Luft auf. Der innere Abschnitt 307b wird durch ein Loch 310 in der Wand 223 eingesetzt. Der innere Abschnitt 307b erstreckt sich auch durch ein Loch 311, das in einer Befestigungsplatte 223a gebildet ist, die auf die Wand 223 aufgeschweißt ist. Eine Arretierungsmutter 312 und eine sechseckige Kappe 314 werden auf den inneren Abschnitt 307b geschraubt, um die Düse 306 an der Befestigungsplatte 223a festzuklemmen. Die Kappe 314 umfasst eine Austrittsöffnung 316 und der innere Abschnitt 307b umfasst einen dreieckigen Schlitz 318. Durch die Auswahl der Position der Kappe 314 entlang der Länge des inneren Abschnitts 307b kann die effektive Größe der Luftöffnung der Innenseite des inneren Abschnitts 307b zur Austrittsöffnung 316 eingestellt werden. Die Arretierungsmutter 312 wird dann am inneren Abschnitt 307b positioniert, um die Befestigungsplatte 223a gegen die Kappe 314 zu klemmen.

Durch die Verwendung dieser Düse 306 kann die Orientierung der Austrittsöffnung 316 innerhalb des Entladerohrs 59 oder des Sumpfs 60 leicht geändert werden, indem die Verriegelungsmutter 312 gelöst und der Düsenkörper 307 neu ausgerichtet wird. Vorzugsweise wird die Austrittsöffnung 316 in einem Abstand von etwa 1 bis 2 mm von der inneren Oberfläche der Wand 223 positioniert.

Die Figur 8 stellt noch eine andere Düse 406 dar. Diese Düse 406 kann an den in Figur 2 gezeigten Positionen verwendet werden. Die Düse 406 umfasst einen anderen Düsenkörper 407, der mit dem Düsenkörper 307 aus Figur 7 identisch ist, außer dass ihm der Schlitz 318 fehlt. Eine andere sechseckige Kappe 414 umfasst eine axial angeordnete Öffnung 416. Die Anbringung der Düse 406 an der Wand 22, wie beispielsweise an der Endwand des Trogs 60 ist dieselbe wie die Anbringung der in Figur 7 gezeigten Düse 306. Die Verriegelungsmutter 312 (nicht gezeigt) wird an einem inneren Abschnitt des Düsenkörpers 407 positioniert, um die Platte 223a (nicht gezeigt) an der Kappe 414 festzuklemmen.

## Patentansprüche

1. Erntemaschine mit einem Vorratsbehälter (40), **dadurch gekennzeichnet, dass** eine Reinigungseinrichtung für den Vorratsbehälter (40) vorhanden ist, dass am Vorratsbehälter (40) eine Vielzahl von Düsen (106, 306, 406) angebracht sind, die im Vorratsbehälter (40) angeordnete Austrittsöffnungen (228, 316, 416) aufweisen, um ein fließfähiges Medium, insbesondere Luft oder eine Flüssigkeit, in den Vorratsbehälter (40) abzugeben und eine Reinigung des Vorratsbehälters (40) von Erntegut zu bewirken, und dass die Düsen (106, 306, 406) mit Leitungen in Strömungsverbindung stehen, die unter Druck stehendes fließfähiges Medium führen.

2. Erntemaschine nach Anspruch 1, **dadurch gekennzeichnet, dass** am Boden des Vorratsbehälters (40) ein Schneckenförderer (56, 58) angeordnet ist, der durch die Düsen (106, 306, 406) gereinigt wird.

3. Erntemaschine nach Anspruch 2, **dadurch gekennzeichnet, dass** die Düsen (106, 306, 406) das Medium mit einer in Längsrichtung des Schneckenförderers (56, 58) gerichteten Komponente in den Schneckenförderer (56, 58) abgeben.

4. Erntemaschine nach Anspruch 2 oder 3, **dadurch gekennzeichnet, dass** der Schneckenförderer (56, 58) während der Reinigung bewegbar ist.

5. Erntemaschine nach einem der Ansprüche 1 bis 4, **dadurch gekennzeichnet, dass** die Leitungen mit um die Erntemaschine verteilten Anschlussstücken (120a, 120b, 120c, 120d, 120e) verbunden sind, an denen das Medium abgenommen werden kann.

6. Erntemaschine nach Anspruch 5, **dadurch gekennzeichnet, dass** sich ein Anschlussstück (120a) in der Nähe des Vorratsbehälters (40) befindet.

7. Erntemaschine nach Anspruch 5 oder 6, **dadurch gekennzeichnet, dass** an den Anschlussstücken (120a, 120b, 120c, 120d, 120e) ein tragbares Düsenrohr (122) anschließbar ist, mit dem die Erntemaschine gereinigt werden kann.

8. Erntemaschine nach einem der vorhergehenden Ansprüche, **dadurch gekennzeichnet, dass** sie ein Mähdrescher (10) ist.

## Claims

1. Harvesting apparatus with a grain tank (40), **characterised in that** a cleaning system is provided for the grain tank (40), that a plurality of nozzles (106, 306, 406) are attached to the grain tank (40) and have orifices (228, 316, 416) arranged in the grain tank (40) to discharge a flowable medium, in particular air or a fluid, into the grain tank (40) and cause the grain tank (40) to be cleaned of crop material, and that the nozzles (106, 306, 406) are flow-connected to tubes, which conduct pressurised flowable medium.

2. Harvesting apparatus according to Claim 1, **characterised in that** an unloading auger (56, 58), which is cleaned through the nozzles (106, 306, 406), is arranged on the floor of the grain tank (40).

3. Harvesting apparatus according to Claim 2, **characterised in that** the nozzles (106, 306, 406) discharge the medium in the unloading auger (56, 58) with a component directed in the longitudinal direction of the unloading auger (56, 58).

4. Harvesting apparatus according to Claim 2 or 3, **characterised in that** the unloading auger (56, 58) is movable during cleaning.

5. Harvesting apparatus according to one of Claims 1 to 4, **characterised in that** the tubes are connected to fittings (120a, 120b, 120c, 120d, 120e), which are distributed around the harvesting apparatus and at which the medium can be removed.

6. Harvesting apparatus according to Claim 5, **characterised in that** a fitting (120a) is located in the vicinity of the grain tank (40).

7. Harvesting apparatus according to Claim 5 or 6, **characterised in that** a portable wand (122), with which the harvesting apparatus can be cleaned, can be connected to the fittings (120a, 120b, 120c, 120d, 120e).

8. Harvesting apparatus according to one of the preceding claims, **characterised in that** it is a combine-harvester (10).

## Revendications

1. Machine de récolte comportant un réservoir (40), **caractérisée en ce qu'**il est prévu un dispositif de nettoyage pour le réservoir (40), **en ce qu'**une pluralité de buses (106, 306, 406) sont montées sur le réservoir (40), lesquelles comportent des orifices de sortie (228, 316, 416) agencés dans le réservoir (40) afin de distribuer dans le réservoir (40) un agent fluide, en particulier l'air ou un liquide, et d'effectuer un nettoyage du réservoir (40) de produits de récolte, et **en ce que** les buses (106, 306, 406) sont reliées à des conduites, dans lesquelles circule l'agent fluide sous pression.

2. Machine de récolte selon la revendication 1, **caractérisée en ce que** sur le fond du réservoir (40) est agencée une vis de transport (56, 58) qui est nettoyée au moyen des buses (106, 306, 406).

3. Machine de récolte selon la revendication 2, **caractérisée en ce que** les buses (106, 306, 406) distribuent le fluide dans la vis de transport (56, 58) selon une composante dirigée dans le sens longitudinal de la vis de transport (56, 58).

4. Machine de récolte selon la revendication 2 ou 3, **caractérisée en ce que** la vis de transport (56, 58) est mobile pendant le processus de nettoyage.

5. Machine de récolte selon l'une quelconque des revendications 1 à 4, **caractérisée en ce que** les conduites sont reliées à des raccords (120a, 120b, 120c, 120d, 120e), qui sont répartis autour de la machine de récolte et au niveau desquels peut être soutiré le fluide.

6. Machine de récolte selon la revendication 5, **caractérisée en ce qu'**un raccord (120a) est situé à proximité du réservoir (40).

7. Machine de récolte selon la revendication 5 ou 6, **caractérisée en ce qu'**une lance (122) portative, permettant de nettoyer la machine de récolte, peut être reliée aux raccords (120a, 120b, 120c, 120d, 120e).

8. Machine de récolte selon l'une quelconque des revendications précédentes, **caractérisée en ce que** ladite machine est une moissonneuse-batteuse (10).
